# EUROPEAN PATENT APPLICATION

(11) **EP 3 878 919 A1**
(43) Date of publication of application: **15.09.2021**
(21) Application number: 21160997.9
(22) Date of filing: 05.03.2021
(51) Int. Cl.: C09J 133/06, C09J 167/04, C09J 163/00, C08G 59/50

(54) **ADHESIVE COMPOSITION FOR THERMALLY-REVERSIBLE USE**

(30) Priority: 10.03.2020 ES 202030200
(71) Applicant: Fresmak, S.A., 20800 Zarautz (Guipuzcoa) (ES)
(72) Inventor: Pascual González, Ana, 20180 Oiartzun (ES); Cenarruzabeitia Peypoch, Ramón, 20800 Zarautz (ES)
(74) Representative: Izquierdo Blanco, Maria Alicia

(57) **Abstract**

Adhesive composition for thermally-reversible use with high adhesion power, which maintains its initial dimensions once applied, comprising at least high-molecular-weight polycaprolactone (PCL) polyester, selectively reinforced with cross-linked epoxy resin that acts in a proportion as an adhesion reinforcement, while the rest of the epoxy resin provides the property of non-flow and shape memory, depending on the synthesis of its procurement process, applicable to temporarily affix elements, which later, with the action of an external stimulus consisting of increasing its temperature, can easily be detached again without generating any residue and, once detached, the extracted adhesive composition can be reused in new adhesive processes.

## Description

### SUBJECT OF THE INVENTION

The present invention refers to a solid and thermo-reversible adhesive composition conceived for application with temperature maintaining its initial dimensions until reaching an adhesion force between 500-1000N/cm², that is, so that by raising its temperature it does not flow or change shape. Likewise, in terms of its thermo-reversible properties, maintaining a high adherent power in each successive application, this means that it can be used to temporarily affix elements, which later, with the action of an external stimulus consisting of increasing the temperature, can easily be removed again without generating any residue.

The scope of the present invention is the bonding and adhesion of parts, where the need for bonding between the parts to be joined is temporary and, once they are detached, the adhesive composition can be reused in new adhesion processes.

### BACKGROUND OF THE INVENTION

Regarding the state of the art, as to the properties of other adhesives on the market, adhesives of the "PSA hot melt" type for reversible use are known, which are used by applying light pressure between the elements to be joined and some also require temperature, these being very common in the manufacture of double-sided tapes, labels and stickers.

However, compared to the proposal of the present invention, the holding strength is two orders of magnitude lower. Moreover, these formulations have the drawback that they are sticky at room temperature and so it is necessary to use a support to handle them, usually with double-sided tape. Lastly, these "hot melt" type adhesives do not maintain their dimensional structure when applying temperature, and are therefore not reusable in any case.

Thus, reviewing the inventions present in the state of the art closest to the proposal of the present invention, documents have been found that have polycaprolactone as a component of the adhesive, remaining in a solid state before and after affixing and having the property of being reversible. However, as in the case of the invention with publication number and titles respectively; US2004037990, "Adhesive composition and adhered structure that thermally peeled with ease", they do not contain epoxy resin in the mixture so the bonding properties differ, especially the adhesion strength, which is much lower, and with the high temperatures present, for example, in machining processes, bonding could be faulty, as adhesion would only occur at room temperature with pressure and there would not be the ability of shape recovery, nor would the adhesive mixture include curing agents providing a permanent solid state.

A similar case occurs in Patent JP2000087004, "Holding agent for workpiece and separation of workpiece held therewith", the adhesive of which is attached at room temperature and requires heating for detachment, but the adhesion strength is much lower, as it is indicated for semiconductor wafers or precision glass and not for machining parts, not having shape recovery.

Thus, by way of synthesis, the "Adhesive composition for thermally-reversible use" provides the following advantages compared to the state of the art;
- It is dry and non-sticky, remains solid at room temperature and can be easily handled.
- Its shape is not altered during its bonding process when temperature is applied for this purpose and it is left to cool.
- It is reversible, as it affixes and detaches easily when temperature is applied, without leaving any residue.
- It is therefore a completely-reusable adhesive composition as a consequence of the two previous properties.
- Adhesion power up to 1000N/cm² comparable to commercial adhesives with high adhesion power used for permanent adhesive bonds, such as the popular "Loctite".

Continuing with the evaluation, taking into account the state of the art in relation to the synthesis of the adhesive object of the present invention, the mixtures of epoxy resin with polycaprolactone using the curing agents DDS and DDM separately have already been studied previously. In these cases, the properties of both resulting materials differ from the results obtained with a selective reaction process of a mixture of curing agents in that they differ markedly in their reactivity. In fact, it is found that only in this case, the properties of high adhesive power, reversibility and shape memory are obtained in the same material.

On the other hand, the fact of obtaining a solution (homogeneous mixture) of cured epoxy spheres (reinforcement) in the polymeric matrix, makes the material have total homogeneity. Unlike any compound material or "composite" obtained by dispersing (heterogeneous mixing) of organic or inorganic fillers in polymer matrices, the properties of the material formed by a homogeneous mixture will always be higher than properties of a material formed by dispersion (heterogeneity gives rise to weak points in any property). Additionally, the processes of dispersion of charges in polymeric matrices require the addition of other substances (dispersants) to improve the compatibility of charges with the matrix, as well as very specific dispersion processes and equipment (including ultrasound).

Therefore, by way of synthesis, the "Adhesive composition for thermally-reversible use" is obtained from an initial mixture that is totally miscible and easy to mix with simple mechanical stirring, and then in the curing reaction itself where the spheres are formed, which contributes the following advantages with respect to the state of the art;
- By using mixtures of different curing agents, antagonistic properties are obtained in the same material by combining high adhesion power with reversibility.
- Filler solutions for reinforcement are obtained rather than dispersions, thus improving the final properties and without needing to add any additive to the formulation.

Finally, concerning the state of the art, and with regard to its application, there are no reversible bonds with high bonding power, so the "Adhesive composition for thermally-reversible use" could be used in a novel manner in the following applications;
- For any application requiring a strong, non-permanent bond, for example in manufacturing processes such as assembly, machined or processed and where conventional mechanical fastening cannot be used or is notably improved. Thus, sometimes the use of mechanical fasteners implies drawbacks and they are not effective when it comes to, for example, fastening workpieces with complex geometries or parts that can be damaged by mechanical fastening as in the case of fragile material pieces, glass, ceramic or composite materials, soft parts such as foams or thin metal parts.
- To carry out the affixing of different materials around the same piece, it later being necessary to separate them in order to recover all the materials separately, facilitating without doubt and by way of example the recycling processes.

### EXPLANATION OF THE INVENTION

By way of explanation of the invention, the "Adhesive composition for thermally-reversible use" that is the subject of the present invention is based on the use of the polycaprolactone (PCL) polyester, characterised by its high molecular weight between 10,000 and 80,000 grams per mole, reinforced by epoxy resin selectively crosslinked acting in a proportion as adhesion reinforcement, while the remainder of the epoxy resin chemically bound to polycaprolactone chains, provides the property of non-fluidity and shape memory, depending on the synthesis of its production process based on the following stages;
1. Obtaining a mixture of curing agents consisting of 4.4'-diamino diphenylmethane (DDM) and 4.4'-diamino diphenyl sulfone (DDS) 30-80% and 70-20%, respectively.
2. Polycaprolactone reagents (50-80%) and epoxy resin (50-20%) are added to a reactor together with the aforementioned mixture of curing agents in a 1:2 molar mixture of curing agents, with respect to the proportion of epoxy resin.
3. Mixing all reagents by stirring at a speed between 200 and 400rpm, temperature between 100 and 130°C for a time between 2 and 5 hours to obtain a transparent and fully-miscible mixture.
4. Filling the moulds of different shapes and sizes with the mixture obtained, depending on the desired adhesive format; in the form of cylinders, geometric plates or lattices thereof or films.
5. Finally, the moulds are placed in an oven at a temperature between 140 and 180ºC, in order for the selective reaction between the epoxy resin and the two curing agents to take place, until the epoxy resin reacts first with the more reactive curing agent (DDM) and then the rest of the epoxy resin with the low reactive curing agent (DDS), originating two different chemical morphologies in the final mixture:
   - A % of epoxy resin reacts with 4.4'-diamino diphenylmethane (DDM) being chemically bound to polycaprolactone to form a thermosetting material incapable of flowing with the temperature.
   - The rest of the % of epoxy resin reacts with the 4.4'-diamino diphenyl sulfone (DDS) forming spheres of between 3-10 microns in diameter dissolved in the polycaprolactone matrix. Thus, these spheres are formed through a phase separation in the epoxy/PCL system and act as a reinforcement providing cohesion to the thermoplastic matrix (PCL). Thus, the reinforcement is synthesized in the adhesive-manufacturing process itself obtaining an epoxy particle solution in polycaprolactone (homogeneous mixture) resulting in a very homogeneous compound with very good properties.

Given that in the described formulation, the compound providing the initial tackiness is polycaprolactone, we obtain a compound-type "composite" containing:
- The part of the adhesive component that is the "free" or no-chemically bonded polycaprolactone, providing tack to the material.
- Cross-linked epoxy resin in the form of spheres dissolved in the polycaprolactone matrix, which provide cohesion, increasing the tack of the polycaprolactone at adhesion values between 500-1100N/cm².
- The rest of the polycaprolactone is physico-chemically bound in an epoxy resin reticulum, forming a thermosetting material, meaning that the final composition will not flow with the temperature, having shape memory.

From the characterisation of the product and its synthesis until it is obtained, its use procedure to affix two elements is also protected, and these can later be detached when desired, taking into account the following requirements for the procedure's application;
A. Use to affix two elements:
   The adhesive composition in any type of shape and geometry obtained from the cutting of a film, plate, cylinder, die-cutting etc., is applied at a temperature between 80-150ºC in combination with a contact pressure between 2 and 3 Kg/cm², so that the adhesion between the elements to be bonded occurs when the system is cooled to room temperature between 17 and 30ºC, reaching adhesion forces between 500-1000N/cm².
B. Separation of two previously affixed elements and recovery of the adhesive composition:
   To detach one of the affixed portions, the temperature will rise until it is between 50-80°C, separating one of the substrates easily and without leaving residue in the detached part. Finally, to fully remove the adhesive object of the present invention, a slight manual pressure is exerted from one of its ends, detaching it from the surface easily without leaving any residue on the element from which it is detached.

From the procedure described, being an adhesive composition with a high adherent power and completely reversible, it maintains its initial dimensions once applied. That is, when applying a temperature of between 80-150ºC, the material does not lose its initial shape, so it can be reused in a new adhesion process similar to the previous one, being able to be used among other applications for:
- High retention of parts in manufacturing processes such as for fasteners in machining processes.
- Affixing different parts of the same object that may later be separated, for example, to facilitate recycling.
- Affixing sensors for measurements at specific locations for the duration of the measurement.

### DESCRIPTION OF THE DRAWINGS

To complement the description that is being made and in order to assist a better understanding of the characteristics of the invention, according to a preferred example of a practical embodiment thereof, a set of drawings is annexed wherein, in an illustrative and non-limitative manner, the following has been represented:
Figure 1.- Perspective view of manual positioning of the adhesive sheet.
Figure 2.- Perspective view of the adhesive sheet on the lower metal part once it reaches the affixing temperature.
Figure 3.- Perspective view of the upper metal part on the lower metal part with intermediate adhesive film when affixing, wherein a force of 2-3 kg must be applied.
Figure 4.- Perspective view of the two already-affixed pieces once the intermediate adhesive sheet has reached room temperature.
Figure 5.- Perspective view of the time wherein the manual separation of the upper metal part occurs, once the intermediate adhesive sheet has achieved a temperature of between 50 and 80ºC.
Figure 6.- Perspective view of the time wherein the manual separation of the intermediate adhesive sheet from the inner metal part takes place, as a continuation of the separation of the upper part.

In the figures cited, the following constituents can be highlighted;
1. Adhesive sheet.
2. Lower metal part.
3. Hand.
4. Upper metal part.

### EXAMPLE OF PREFERRED EMBODIMENT

### Example 1

By way of example of preparation of the "Adhesive composition for thermally-reversible use" according to the present invention, it can be carried out according to the following synthesis;
1. 100 g of polycaprolactone (0.002 mol), 43 g of DGEBA epoxy resin (0.126 mol) and 20 g of DDS curing agent (0.082 mol) are mixed in a 250ml reactor to a temperature of 130°C with stirring at 200 rpm.
2. Once a homogeneous and transparent mixture is obtained, 9 g of a more-reactive curing agent (DDM) (0.044 mol) is added and the whole mixture is stirred at 200rpm at a temperature of 100°C.
3. The resulting (transparent) mixture is poured into an aluminium mould (coated with a non-stick agent).
4. The mould with the reaction mass is placed in an oven at 140°C. The progress of the reaction is followed by infrared spectroscopy. When the conversion reaches between 30 and 40%, the oven temperature is raised to 180ºC. The reaction continues until a conversion between 80-90%. The total reaction time is approximately between 4 and 5 hours. The product obtained is whitish and rubbery in appearance at 180ºC.
5. After the mould has cooled, the mixture is unmoulded and cut to the desired adhesive shape and dimensions.

A solid, flexible and non-sticky material is thus obtained at room temperature based on a biphasic chemical structure composed of a PCL matrix and an epoxy-PCL reticulum. The epoxy-PCL reticulum provides the system's thermosettable (non-flowing) component while the PCL segments attached thereto provide flexibility sufficient to deform the material at high temperatures and adapt to any surface. In addition, this structure provides the property of shape memory. The PCL matrix on the other hand, provides the necessary tack as an adhesive.

### Example 2

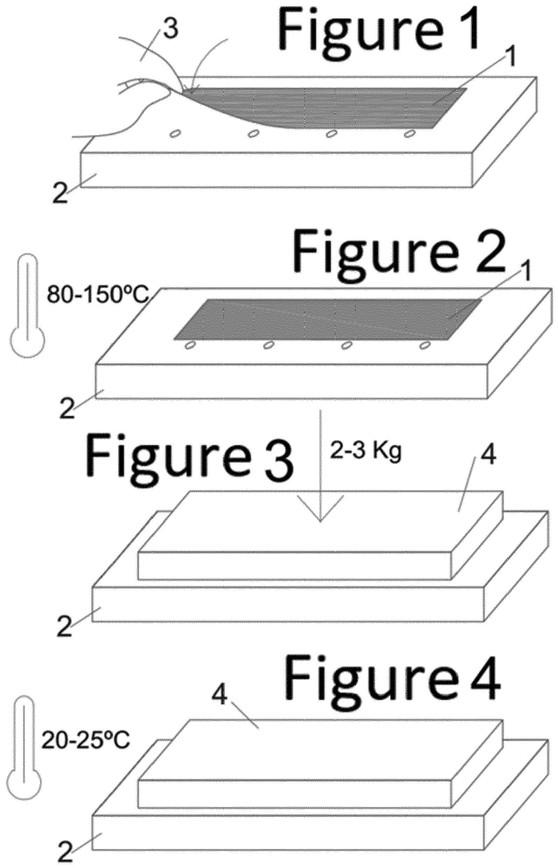

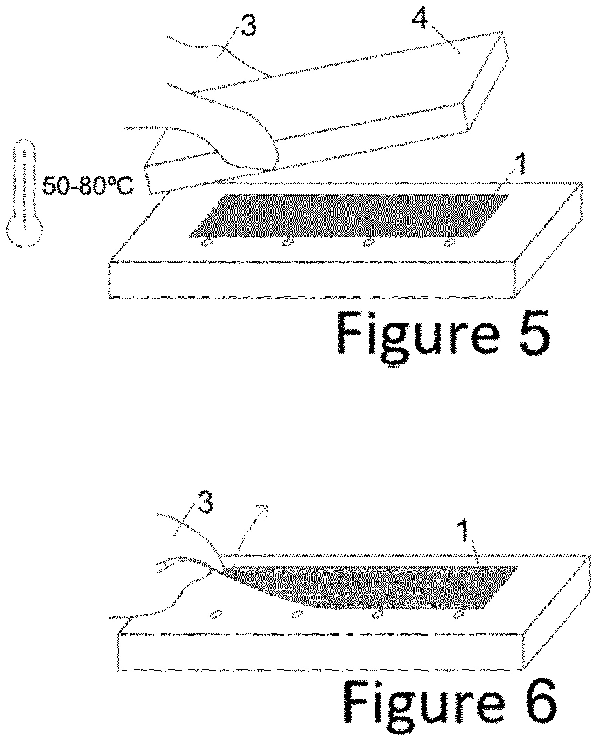

Using the "Adhesive composition for thermally-reversible use" described in example 1, it is possible to temporarily join two metal pieces that, once joined, form part of a mould used in batch stamping manufacturing as shown in Figures 1-6, following the following steps;
1. Cutting of the adhesive sheet (1) obtained in order to have a format that is, for example, rectangular in shape and dimensions, adapted to the contact surface of the elements to be joined.
2. Placing the adhesive sheet (1) on one of the substrates to be affixed (2).
3. Heating of the adhesive sheet (1) placed on one of the two substrates (2) until it reaches a temperature between 80 and 150ºC.
4. Placing the second metal piece (4) on the piece (2) on which the adhesive sheet (1) has already previously been placed just at the position at which both parts (2-4) are to be bonded by applying a contact pressure between both between 2 and 3 kg/cm².
5. Cooling the whole until room temperature between 17 and 30ºC is reached.

At the end of the manufacture of the desired number of units, making use of the mould formed by both joined pieces (2-4), the two previously affixed elements can be separated, releasing each piece (2-4) to form other compositions depending on the reference whose manufacture is desired and recover the adhesive composition (1) for another similar use, following the steps below;
1. Raising of the temperature until a temperature of between 50-80°C is reached.
2. Manually separating (3) one of the two elements (2-4) without dragging any residue.
3. Removing the adhesive sheet (1) by a slight manual pressure (3) from one end thereof by easy peeling of the surface without leaving any residue on the element which is peeled (2).

## Claims

1. Adhesive composition for thermally-reversible use comprising at least one polycaprolactone (PCL) polyester of high molecular weight between 10,000 and 80,000 grams per mole, reinforced with selectively cross-linked epoxy resin that acts in a proportion as adhesion reinforcement, while the rest of the epoxy resin provides the property of non-fluidity and shape memory, depending on the synthesis of its production process.

2. Process for obtaining the adhesive composition described according to claim 1, **characterised by** comprising at least the following steps;
A. Obtaining a mixture of curing agents consisting of 4.4'-diamino diphenylmethane (DDM) and 4.4'-diamino diphenyl sulfone (DDS) 30-80% and 70-20%, respectively.
B. The polycaprolactone reagents (50-80%) and the epoxy resin (50-20%) are added to a reactor together with the referred mixture of curing agents in a 1:2 molar ratio of mixture of curing agents, with respect to the proportion of epoxy resin.
C. Mixing all the reagents by stirring at a speed between 200 and 400rpm, a temperature between 100 and 130°C for a time between 2 and 5 hours, obtaining a transparent and totally-miscible mixture.
D. Filling the moulds of different shapes and sizes with the mixture obtained, depending on the desired adhesive format; in the form of cylinders, plates or films.
E. Introduction of the moulds in an oven at a temperature between 140-180°C until a percentage of epoxy resin with 4.4'-diamino diphenylmethane (DDM) reacts first, being chemically bonded to the polycaprolactone in a thermoset material and, subsequently, the remaining percentage of epoxy resin also reacts with the 4.4'-diamino diphenyl sulfone (DDS) to form spheres between 3-10 microns in diameter dissolved in the polycaprolactone matrix through a phase separation in the epoxy/PCL system.

3. A method of using the adhesive composition described according to claims 1-2, for affixing at least two elements which subsequently can be detached when desired, releasing the adhesive composition for a new use, comprising;
A. Use for affixing the adhesive composition described in any shape and geometry at a temperature between 80-150°C in combination with a contact pressure between 2 and 3 kg/cm², so that the adhesion between the elements to be bonded occurs when the system is cooled to room temperature in the 17-30°C range.
B. Separation of two previously affixed elements and recovery of the adhesive composition, first detaching one of the affixed parts, to raise the temperature until it is in the range of 50-80°C, to subsequently remove the adhesive composition as a whole from the element to which it is still attached, applying slight manual pressure from one of its ends.
